Europäisches Patentamt

European Patent Office

Office européen des brevets

(11) Publication number: **0 023 282**
**B2**

(12) **NEW EUROPEAN PATENT SPECIFICATION**

(45) Date of publication of the new patent
specification: **04.05.88**

(51) Int. Cl.⁴: **B 60 G 15/06**

(21) Application number: **80103774.8**

(22) Date of filing: **02.07.80**

(54) **Outer tube for telescopic shock absorber.**

(30) Priority: **28.07.79 JP 104339/79 u**

(43) Date of publication of application:
**04.02.81 Bulletin 81/05**

(45) Publication of the grant of the patent:
**25.05.83 Bulletin 83/21**

(45) Mention of the opposition decision:
**04.05.88 Bulletin 88/18**

(84) Designated Contracting States:
**DE FR GB**

(56) References cited:
**DE-A-2 507 308**
**DE-B-1 630 198**
**DE-U-7 606 640**
**FR-A-1 548 903**
**JP-U-52 060 592**

**Lueger Lexikon der Technik,4th edition, Vol.12,
pp.589-590**

(73) Proprietor: **KAYABA KOGYO KABUSHIKI
KAISHA**
**Sekai Boeki Center Bldg., 4-1 2-chome
Hamamatsu-cho Minato-ku
Tokyo (JP)**

(72) Inventor: **Horiyama, Osamu**
**5700, Dota Kani-cho
Kani-gun Gifu-ken (JP)**
Inventor: **Nakada, Etsuro**
**1906-3, Imawatari Kani-cho
Kani-gun Gifu-ken (JP)**
Inventor: **Ogawa, Motoaki**
**881, Oaza-Tomioka
Inuyama-shi Aichi-ken (JP)**

(74) Representative: **Patentanwälte Dipl.-Ing. A.
Grünecker, Dr.-Ing. H. Kinkeldey, Dr.-Ing. W.
Stockmair,
Dr. rer. nat. K. Schumann, Dipl.-Ing. P.H. Jakob,
Dr. rer. nat. G. Bezold Maximilianstrasse 58
D-8000 München 22 (DE)**

## Description

The present invention generally relates to a telescopic type shock absorber which is known in the art as a Macpherson type shock absorber and more specifically to a telescopic type shock absorber, comprising an inner tube, a piston carried at the lower end of a piston rod and sealingly slidable in the inner tube, and an outer tube coaxially surrounding the inner tube and the piston rod, The overall configuration of a telescopic shock absorber to which the present invention relates is known in the art per se and disclosed in numerous publications typified by U.S.—A—2,624,592 and 3,490,785 and GB—A—1,145,942.

In shock absorbers of the type in question the piston rod slides through a bearing fixed to the upper ends of the inner and outer tubes and is fixed at its upper end to a vehicle suspension. The lower end of the outer tube is fixed to a knuckle spindle for a wheel. The vehicle is supported by means of the wheel, knuckle spindle, shock absorber and suspension. The inner and outer tubes are filled with hydraulic fluid to dampen relative telescopic movement between the piston rod and the inner and outer tubes and thereby dampen road shocks resulting from the operation of the vehicle.

The maximum bending stress occurs at the lower end of the outer tube where it is fixed to the knuckle spindle and progressively decreases in the upward direction. Prior art telescopic shock absorbers comprise outer tubes which have uniform inner and outer diameters and wall thicknesses. The wall thickness and inner and outer diameters are selected to be sufficient to absorb the maximum bending stress in the lower portion of the outer tube. Thus, the upper portion of the outer tube is overdesigned and excessively rigid.

Excess rigidity of the outer tube prevents the outer tube from bending along with the piston rod during operation of the vehicle. This increases the frictional resistance between the piston rod and the bearing at the upper end of the tubes, preventing smooth operation of the shock absorber and increasing wear to an unnecessarily high extent.

One prior art attempt to overcome this problem is to increase the clearance between the piston rod and the bearing. Although this somewhat improves the frictional resistance situation, it makes it very difficult to perform accurate wheel alignment of the vehicle.

Another prior art expedient is disclosed in JP—Utility Model application 50—147939 and involves reducing the thickness of the outer tube from the lower portion to the upper portion thereof. However, this requires a machining operation to cut the taper which greatly increases the cost and production time of the outer tube.

In the shock absorber according to DE—A—25 07 308 the outer tube is cylindrical essentially over its entire length except for a tapered shoulder in the immediate vicinity of the upper end guiding the piston rod. Due to the uniformity of the outer diameter and the constant wall thickness of the outer tube along its length, there is a constant bending stiffness of the outer tube at any point along its length. For this reason, the outer tube is as stiff at its upper end as at its lower end and therefore has disadvantages mentioned above already.

In another shock absorber according to DE—UM 76 06 640, the outer tube is also cylindrical essentially over its entire length except for two places. One of these exemptions is a tapered shoulder in the immediate vicinity of the upper end guiding the piston rod. Another exemption is formed by several indentations provided around the circumference of the cylindrical wall at one point of its length. The indentations serve as spacers to keep the inner tube in axial alignment with the outer tube and have no remarkable affect on the bending stiffness of the outer tube at this point of its length. Thus, the outer tube has a uniform wall thickness and a constant outer diameter essentially along its entire length. Therefore, the rigidity and bending stiffness of the outer tube are uniform from the lower end to the upper end thereof, which implies the same disadvantages as discussed above in connection with other shock absorbers known in the art.

The present invention is intended to remedy the aforementioned drawbacks and to overcome the aforementioned difficulties and disadvantages. The problem underlying the invention is to create a shock absorber of the type mentioned in the beginning, which is easy and economical to manufacture on a commercial production basis, and in which the rigidity of the outer tube decreases from a lower end to an upper end, so that internal friction and wear are reduced.

According to the invention, the afore-mentioned problem is solved in that said outer tube has a substantially uniform wall-thickness and has been plastically stretched in such a manner that the outer tube tapers inwardly successively along the length of the outer tube from an end portion of the outer tube attached to a knuckle spindle to another end portion thereof remote from the knuckle spindle.

In accordance with the present invention, a metal outer tube of a telescopic type shock absorber is formed in such a manner as to have its rigidity decrease from a lower end to an upper end thereof. The rigidity in the lower end portion is sufficient to withstand the maximum bending stresses which occur at the lower end where the tubes is fixed to a knuckle spindle. The reduced rigidity in the upper portion allows the outer tube to bend along with a piston rod and reduces the frictional resistance between the piston rod and a bearing.

One advantageous embodiment of the present invention is characterised in that the outer tube tapers inwardly in a continuous manner.

Alternatively, a shock absorber according to the invention may be designed such that the outer tube tapers inwardly in a stepwise manner.

Two ways of carrying out the invention are described in the following description and illustrated in the accompanying drawings.

Figure 1 is a vertical sectional view of a telescopic shock absorber embodying the present invention;

Figure 2 is a vertical sectional view of an outer tube of the present shock absorber; and

Figure 3 is a vertical section of another outer tube embodying the present invention.

While the outer tube for a telescopic shock absorber of the present invention is susceptible of numerous physical embodiments, depending upon the environment and requirements of use, substantial numbers of the herein shown and described embodiments have been made, tested and used, and all have performed in an eminently satisfactory manner.

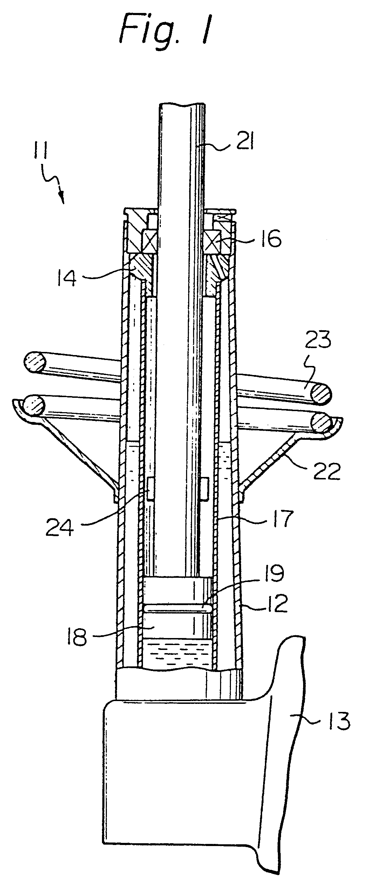

Referring now to Figure 1 of the drawing, a telescopic type shock absorber embodying the present invention is generally designated by the reference number 11 and comprises a metal outer tube 12. The lower end of the outer tube 12 is fixedly connected to a knuckle spindle 13 which, although not illustrated, rotatably supports a wheel of a vehicle. A bearing 14 and oil seal 16 are provided at the upper end of the outer tube 12.

An inner tube 17 is fixed in place inside the outer tube 12 in a coaxial manner and a piston 18 is slidable in the inner tube 17. An annular seal 19 is provided to the piston 18 for sealing engagement with the inner wall of the inner tube 17. The space between the tubes 12 and 17 and the interior of the tube 17 below the piston 18 communicate with each other through holes (not shown) and these spaces are filled with hydraulic fluid or oil. The piston 18 is further provided with a valve (not shown) to dampen movement of the piston 18 in the tube 17.

The shock absorber 11 further comprises a piston rod 21 which extends upwardly from the piston 18 through the bearing 14 and seal 16 and is connected to a suspension of the vehicle through a resilient rubber bushing (not shown). Further illustrated are a spring seat 22 and a coil suspension spring 23 which is operatively mounted between the spring seat 22 and the suspension. A stop 24 is fixed to the piston rod 21 to prevent overextension of the shock absorber 11 through abutment with the lower end of the bearing 14.

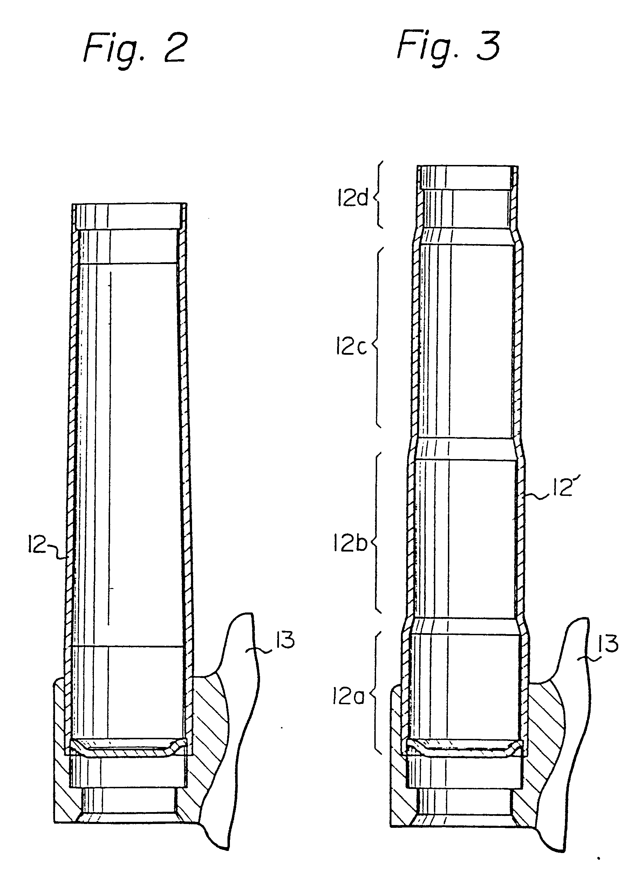

The outer shell 12 is illustrated in Figure 2 and has a uniform wall thickness. However, the diameter of the tube 12 progressively decreases from the lower end portion to the upper end portion thereof. This configuration is produced by plastic stretching of the tube 12 using any known method such as drawing during manufacture.

This arrangement provides sufficient strength and rigidity in the lower portion to absorb the maximum bending stress which occurs at the junction of the tube 12 and knuckle spindle 13. However, the thinner upper portion is less rigid than the lower portion and allows bending of the tube 12 to follow the configuration of the piston rod 21. As a result, the clearance between the piston rod 21 and bearing 14 may be made very small and wheel alignment very accurate. An expensive machining operation to taper the tube 12 is eliminated since the desired result is accomplished by a simple, fast and inexpensive drawing process.

Figure 3 illustrates another outer tube 12′ embodying the present invention in which the wall thickness is uniform but the diameter of the tube 12′ decreases from the lower portion to the upper portion thereof in a stepwise manner. As illustrated, the diameter is reduced in four steps as indicated at 12a, 12b, 12c and 12d.

In summary, it will be seen that the present invention overcomes the drawbacks of the prior art and provides a telescopic shock absorber of greatly improved construction and operation. Various modifications will become possible for those skilled in the art after receiving the teachings of the present disclosure without departing from the scope thereof.

**Claims**

1. Telescopic type shock absorber (11) of the double tube type comprising an inner tube (17), a piston (18) carried at the lower end of a piston rod (21) and sealingly slidable in the inner tube (17), and a metal outer tube (12) coaxially surrounding the inner tube (17) and the piston rod (21), characterized in that said outer tube (12) has a substantially uniform wall-thickness and has been plastically stretched in such a manner that the outer tube (12) tapers inwardly successively along the length of the outer tube from an end portion of the outer tube attached to a knuckle spindle (13) to another end portion thereof remote from the knuckle spindle (13).

2. Shock absorber according to claim 1, characterized in that the outer tube (12) tapers inwardly in a continuous manner (Figure 2).

3. Shock absorber according to claim 1, characterised in that the outer tube (12) tapers inwardly in a stepwise manner (12a, 12b, 12c, 12d) (Figure 3).

**Patentansprüche**

1. Teleskop-Zweirohr-Stoßdämpfer (11) mit einem Innenrohr (17), einen am unteren Ende einer Kolbenstange (21) sitzenden, abdichtend verschieblich im Innenrohr (17) geführten Kolben (18) und einem das Innenrohr (17) und die Kolbenstange (21) koaxial umgebenden metallischen Außenrohr (12), dadurch gekennzeichnet, daß das Außenrohr (12) eine im wesentlichen gleichmäßige Wandstärke aufweist und durch Strecken derart plastisch verformt ist, daß es sich von einem an einem Achsschenkelbolzen (13) befestigten Endstück des Außenrohrs zu einem vom Achsschenkelbolzen (13) entfernten Endstück des Außenrohrs sukzessive über die Länge des Außenrohrs verjüngt.

2. Stoßdämpfer nach Anspruch 1, dadurch gekennzeichnet, daß sich das Außenrohr (12) kontinuierlich verjüngt (Fig. 2).

3. Stoßdämpfer nach Anspruch 1, dadurch gekennzeichnet, daß sich das Außenrohr (12) stufenweise (12a, 12b, 12c, 12d) verjüngt (Fig. 3).

## Revendications

1. Amortisseur de chocs du type télescopique (11) et du type à doubles tubes, comprenant un tube intérieur (17), un piston (18) monté à l'extrémité inférieure d'une tige de piston (21) et coulissant de manière étanche dans le tube intérieur (17), et un tube extérieur métallique (12) entourant coaxialement le tube intérieur (17) et la tige de piston (21), caractérisé en ce que ledit tube extérieur (12) a une épaisseur de paroi pratiquement uniforme et a été étiré plastiquement de telle manière que le tube extérieur (12) s'effile progressivement vers l'intérieur le long du tube extérieur entre une partie d'extrémité du tube extérieur fixée à un axe d'articulation (13) et une autre partie d'extrémité de celui-ci, éloignée de l'axe d'articulation (13).

2. Amortisseur de chocs selon la revendication 1, caractérisé en ce que le tube extérieur (12) s'effile vers l'intérieur d'une manière continue (figure 2).

3. Amortisseur de chocs selon la revendication 1, caractérisé en ce que le tube extérieur (12) s'effile vers l'intérieur en gradins (12a, 12b, 12c, 12d) (figure 3).

**0 023 282**

# Fig. 1

1

# *Fig. 2*

# *Fig. 3*

12d

12c

12'

12b

12

13

12a

13